Europäisches Patentamt

European Patent Office

Office européen des brevets

(11) Veröffentlichungsnummer: **0 108 090**
**B1**

## (12) EUROPÄISCHE PATENTSCHRIFT

(45) Veröffentlichungstag der Patentschrift:
**25.06.86**

(21) Anmeldenummer: **83901351.3**

(22) Anmeldetag: **03.05.83**

(86) Internationale Anmeldenummer:
**PCT/CH 83/00053**

(87) Internationale Veröffentlichungsnummer:
**WO 83/03775 (10.11.83 Gazette 83/26)**

(51) Int. Cl.⁴: **B 01 D 3/00, B 08 B 17/04**

(54) **VORRICHTUNG FÜR INDUSTRIELLE DESTILLATION.**

(30) Priorität: **03.05.82 CH 2710/82**

(43) Veröffentlichungstag der Anmeldung:
**16.05.84 Patentblatt 84/20**

(45) Bekanntmachung des Hinweises auf die Patenterteilung:
**25.06.86 Patentblatt 86/26**

(84) Benannte Vertragsstaaten:
**DE FR GB**

(56) Entgegenhaltungen:
**EP - A - 0 069 663**
**DE - A - 1 802 621**
**DE - A - 2 259 740**
**US - A - 3 475 280**

(73) Patentinhaber: **FELLER & ZINGG GmbH,**
**Wangentalstrasse 252, CH-3173 Oberwangen (CH)**

(72) Erfinder: **FELLER, Eduard, Sandbühlstrasse 23,**
**CH-3122 Kehrsatz (CH)**

(74) Vertreter: **Tschudi, Lorenz et al, Bovard AG**
**Patentanwälte VSP Optingenstrasse 16,**
**CH-3000 Bern 25 (CH)**

ACTORUM AG

## Beschreibung

Die vorliegende Erfindung bezieht sich auf eine Vorrichtung für industrielle Destillation mit einer regulierbar indirekt beheizbaren Destillierkammer und einem Kondensator und auf die Verwendung der Vorrichtung zum Ausdestillieren von Flüssigkeiten mit hohem Gehalt an höher siedenden Komponenten zu einem von niedrig siedenden Komponenten praktisch freien Rückstand.

Abgesehen von den bekannten und mannigfaltigen Destillationsvorgängen in der wissenschaftlichen Forschung und chemischen Industrie gelangt heute kontinuierliche und semikontinuierliche Destillation in vielen Industriebereichen in weitem Ausmass zum Einsatz.

In erster Linie wird ein Destillationsverfahren in Industriezweigen angewendet, in denen Werkstücke vor der Weiterverarbeitung oder Verwendung von anhaftenden Verunreinigungen und öligen und fettigen Rückständen aus vorhergehenden Verarbeitungsstufen vollständig befreit werden müssen. Dies erfolgt in der Regel mittels zweckentsprechender organischer Lösungsmittel. Da derartige Lösungsmittel aufgrund ihres hohen Preises einen wesentlichen Kostenfaktor darstellen, besteht aus ökonomischen Gründen grosses Interesse, diese Lösungsmittel in möglichst reinem Zustand und möglichst quantitativ zurückzugewinnen. Die praktisch einzige Möglichkeit zur Rückgewinnung von reinem organischem Lösungsmittel aus Waschflüssigkeiten der Industrie bietet die Destillation.

Ein Einsatzgebiet der Rückgewinnung von organischen Lösungsmitteln, das zunehmende Bedeutung erlangt, ist die Elektronikindustrie, insbesondere die Herstellung von Leiterplatten für gedruckte Schaltungen. Derartige Platten werden heute durchwegs auf fotografischem Wege automatisch und unter Verwendung von Fotoresistlacken hergestellt. Nach der fotografischen Übertragung des Leiterbildes auf die Platte muss der nicht entwickelte Fotoresistlack vor der Ausführung von weiteren Arbeitsgängen restlos von der Platte entfernt werden. Dies, wie auch die Reinigung von Blechstücken in der metallverarbeitenden Industrie, erfolgt ganz allgemein durch Waschen mit organischen Lösungsmitteln, wobei das jeweils verwendete Lösungsmittel hinsichtlich seiner Eigenschaften, wie Lösevermögen, Beständigkeit, Korrosionswirkung, Rückgewinnbarkeit und nicht zuletzt Preis, dem spezifischen Einsatzgebiet angepasst wird. Industrielle Reinigung mittels organischer Lösungsmittel erfolgt in der Regel unter Zirkulation des Lösungsmittels. Es ist offensichtlich, dass mit zunehmender Anforderung in bezug auf Reinigungswirkung reineres, d.h. weniger verschmutztes Lösungsmittel zirkuliert werden muss. Die Reinigung der organischen Lösungsmittel in industriellen Waschanlagen erfolgt heute durchwegs durch Destillation.

In der Industrie verwendbare, kontinuierlich oder semikontinuierlich wirkende Destillationsanlagen für die Reinigung von organischen Lösungsmitteln sind seit langem bekannt und finden weitverbreitete Anwendung. Bekannte derartige Anlagen wirken beispielsweise nach dem offenen Destillationsprinzip kontinuierlich oder nach dem Vakuum-Destillationsprinzip semikontinuierlich. Beide Methoden ermöglichen die Rückgewinnung von absolut reinem Lösungsmittel, zeigen jedoch erhebliche Nachteile.

Der bei offener Destillation unter normalen Betriebsbedingungen anfallende Destillationsrückstand, der vom Fachmann als «Sumpf» bezeichnet wird, enthält ungefähr 10 Gew.-% Verunreinigungen und 90 Gew.-% Lösungsmittel. Weiteres Ausdestillieren auf bekannten Anlagen ist nach dem Stand der Technik nicht möglich, da sich bei weiterer Eindickung die Verunreinigung, d.h. Komponenten höheren Siedepunktes, an Boden und Wandungen der Destillierkammer absetzen und eine Verkrustung zunehmender Schichtdicke bilden, durch welche die Wärmeübertragung gehemmt und schlussendlich verhindert wird, so dass der Wirkungsgrad der Destillation zunehmend vermindert und schlussendlich unterbrochen wird.

Vakuum-Destillationsanlagen ermöglichen eine etwas höhere Destillationswirkung, da durch die Herabsetzung des Siedepunktes unter Vakuum weniger Wärmeenergie benötigt wird, um die Komponenten mit niedrigerem Siedepunkt abzudestillieren und somit eine dickere Verkrustung von Boden und Innenwandung der Destillierkammer in Kauf genommen werden kann. Andererseits zeigen jedoch Vakuum-Destillieranlagen die Nachteile höherer Anschaffungs- und Betriebskosten, komplizierterer Handhabung und grösserer Störanfälligkeit.

Im industriellen Betrieb, sowohl von offenen wie auch von Vakuum-Destillieranlagen, ist es in der Regel unerwünscht, den Destillationsvorgang so lange auszuführen, bis eine Verkrustung von Boden und Innenwandung der Destillierkammer auftritt. Dies bedeutet, dass ein Sumpf abgepumpt werden muss, dessen Hauptbestandteil, d.h. bis zu etwa 90 Gew.-%, Lösungsmittel ist.

Ein weiteres wichtiges Einsatzgebiet der industriellen Destillation wäre die Aufteilung von organischen Waschmittellösungen aus der blechverarbeitenden Industrie in niedrig siedende Lösungsmittel und höher siedende Öle. In diesem Industriezweig werden Bleche vor der Verarbeitung durch Ziehen, Drücken, Abkanten und dgl. ganzflächig mit meist sehr teuren Spezialölen eingefettet und müssen danach vor weiteren Arbeitsgängen selbstverständlich wieder vollständig entfettet werden, was im allgemeinen durch Waschen mittels organischer Lösungsmittel erfolgt. Die verunreinigten Waschlösungen werden ebenfalls zwecks Rückgewinnung von Lösungsmittel destilliert.

Nach dem vor dem Prioritätsdatum veröffentlichten Stand der Technik sind keine wirtschaftlich und industriell anwendbaren Methoden bekannt, um die vorstehend beschriebenen Sümpfe aus bekannten Destillationsanlagen, die einen sehr hohen Gehalt an organischem Lösungsmittel aufweisen, auszudestillieren. Ein Ausdestillieren auf den vorstehend beschriebenen bekannten Destillationsanlagen bis zur praktisch höchstzulässigen Grenze verlangt, dass die Anlage nach Erreichen dieser Grenze stillgelegt wird und die durch die Destillationsrückstände gebildete Verkrustung von Boden und Innenwandung der Destillierkammer entfernt wird. Obwohl hierfür maschinelle Einrichtungen, wie Rakeln, Abscheideetage, Abstreifrührer und dgl. bekannt sind, haben sich diese in der Praxis nicht bewährt, so dass die Entfernung von Verkrustungen meist auf manuelle Art erfolgt. Aus dem Stillstand der Anlage und den manuellen Reinigungsarbeiten ergibt sich jedoch eine erhebliche Kostensteigerung. Da als organische Lösungsmittel für die vorstehend beschriebenen Verwendungszwecke grösstenteils chlorierte Kohlenwasserstoffe verwendet werden, ergibt sich ausserdem hinsichtlich der zulässigen oberen Grenze des Ausdestillierens eine weitere Einschränkung, da der Destillationssump keinesfalls bis zur Zersetzungstemperatur des Lösungsmittels erwärmt werden darf, um die Bildung des höchst giftigen, korrodierenden und umweltschädigenden Chlorwasserstoffes zu vermeiden.

Aus den vorstehend angeführten Gründen ist es in den genannten Industriezweigen allgemein üblich, die aus den Destillationsanlagen anfallenden Sümpfe mit sehr hohem Gehalt an organischen Lösungsmitteln zu verwerfen. Dies führt zu weiteren schwerwiegenden Problemen, da Abfälle mit derartig hohem Gehalt an organischen, teils giftigen Lösungsmitteln, weder von Kehrichtverbrennungsanlagen noch von Abfalldeponien angenommen werden. Die einzigen, heute bekannten Möglichkeiten der Entsorgung derartiger Abfälle bestehen darin, dass diese Abfälle in Fässer verpackt in Sammeltransporten ans Meer transportiert und durch Spezialfirmen entweder im Meer versenkt oder auf dem Meer in speziellen Verbrennungsschiffen verbrannt werden. Die zunehmend verschärften Umweltschutzvorschriften lassen es jedoch voraussehen, dass diese Möglichkeiten der Entsorgung nicht unbegrenzt weiterbestehen können. Eine weitere Möglichkeit der Entsorgung bieten wenige Spezialfirmen, welche die Destillationssümpfe auf Spezialanlagen weitestmöglich ausdestillieren, in höchstmöglicht eingedickten Rückständen in Fässer verpackt in speziellen Abfalldeponien deponieren und die anfallenden Lösungsmittelgemische zu industriellen Reinigungsmitteln verarbeiten.

Alle vorstehend beschriebenen Entsorgungsmöglichkeiten sind mit sehr viel Umtrieben und hohen Kosten der Entsorgung und der vorlorenen organischen Lösungsmittel verbunden.

In der am 12. Januar 1983 veröffentlichten, kollidierenden europäischen Patentanmeldung EP-A-0 069 663, wird eine Destillationseinrichtung beschrieben, die einen zumindest am Boden der Destillierkammer eng anliegenden, herausnehmbaren Sack aus chemisch inertem Material aufweist. Das Sackmaterial wird jedoch nicht näher spezifiziert, so dass es dem Anwender überlassen bleibt, das bestgeeignete bzw. wirtschaftlichste Material auszuwählen.

Es ist Aufgabe der vorliegenden Erfindung, eine Vorrichtung aufzuzeigen, die es ermöglicht, unter Verwendung von besonderen Einlagesäcken, den Destillationsvorgang auf bekannten Destillationsanlagen der vorstehend beschriebenen Art ohne Verkrustung von Boden und Innenwandung der Destillierkammer zwecks Erhöhung des Wirkungsgrades während verlängerter Betriebsdauer auszuführen.

Diese Aufgabe wird durch die erfindungsgemässe, im Patentanspruch 1 definierte Vorrichtung gelöst. Eine weitere Aufgabe der Erfindung besteht darin, eine besondere Verwendung der erfindungsgemässen Vorrichtung zum Ausdestillieren der in bekannten Destillationsanlagen der vorstehend beschriebenen Art anfallenden Sümpfe zu einem praktisch lösungsmittelfreien Rückstand aufzuzeigen.

Nach der Erfindung wird diese Aufgabe durch die im Patentanspruch 8 definierte Verwendung der erfindungsgemässen Vorrichtung gelöst.

Im nachstehenden wird die Erfindung unter Bezugnahme auf die Zeichnungen beispielsweise erläutert. In den Zeichnungen zeigen:

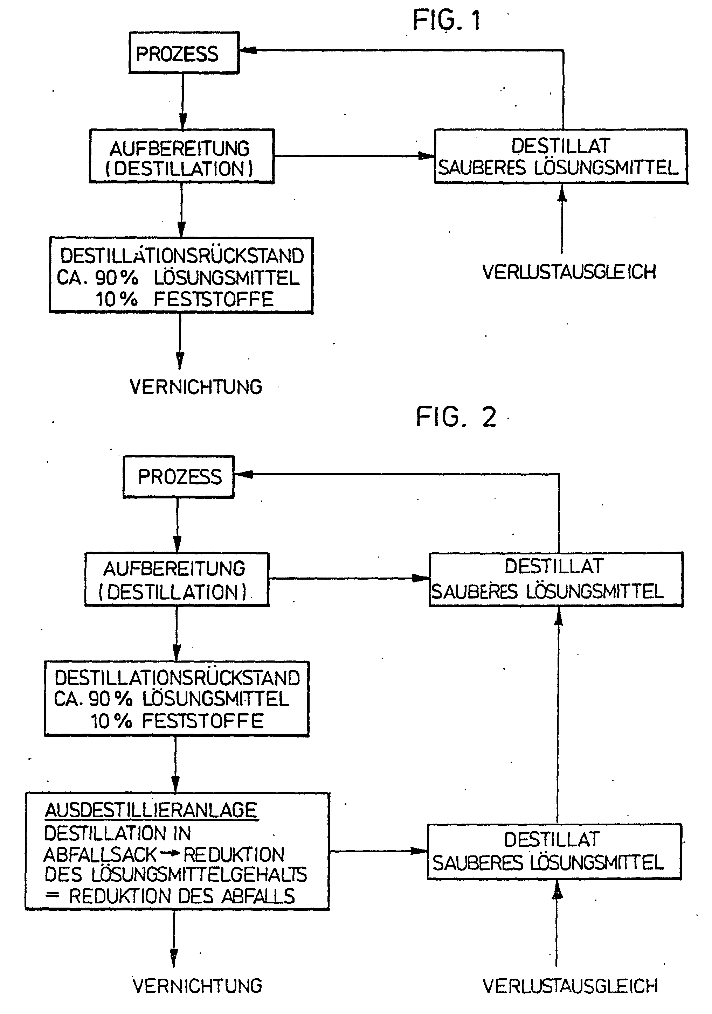

Fig. 1 ein Blockschema einer Destillation nach dem Stand der Technik;

Fig. 2 ein Blockschema einer Ausführungsform des Ausdestillierens nach der Erfindung;

Fig. 3 eine schematische Darstellung einer zum Ausdestillieren gemäss Fig. 2 verwendeten Vorrichtung im Schnitt, wobei der in ein Haltegestell eingespannte, in der Destillierkammer befindliche Sack strichpunktiert in der Phase des Herausnehmens nach Abschluss des Ausdestilliervorganges angedeutet ist;

Fig. 4 eine Seitenansicht des gemäss Fig. 3 mit dem Haltegestell herausgenommenen und auf einer Unterlage abgestellten Sackes;

Fig. 5 eine perspektivische Darstellung der Art des Faltens einer Pergamentpapierfolie zur Herstellung eines nahtlosen Sackes, und

Fig. 6 eine perspektivische Ansicht des gemäss Fig. 5 gefalteten, nahtlosen Sackes aus Pergamentpapier.

Das wesentliche Merkmal der Erfindung besteht darin, dass in der Destillierkammer einer Destillationsvorrichtung ein Sack aus flexiblem Material solcher Art eingesetzt ist, dass er zumindest am Boden der Destillierkammer eng anliegt.

Es ist offensichtlich, dass dieses Merkmal praktisch an jeder bekannten Destillationsvorrichtung ausführbar ist.

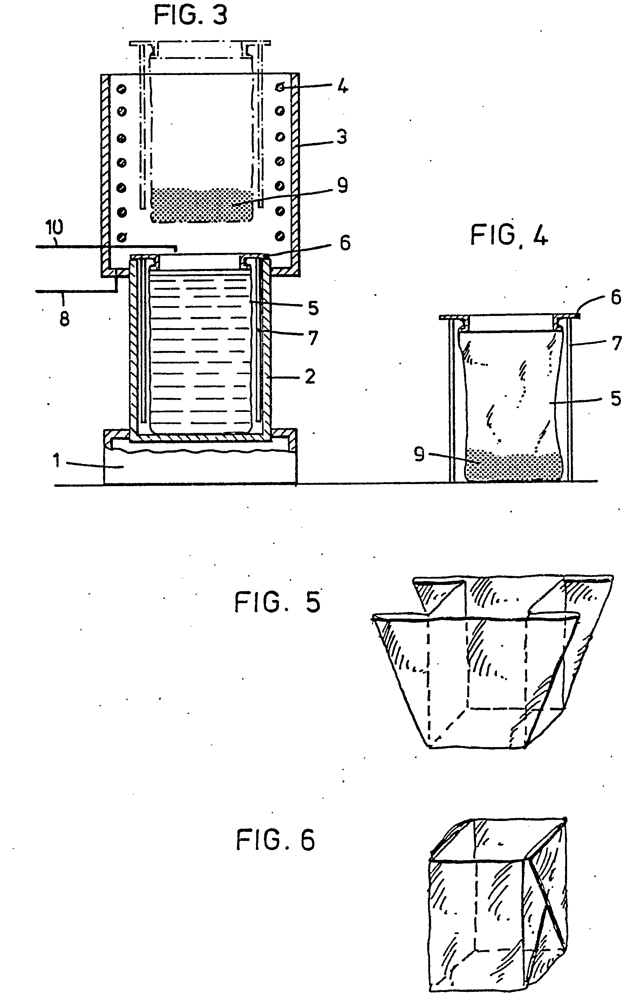

Für den Fachmann ist es selbstverständlich, dass der Sack aus einem Material besteht, das einerseits gegen sämtliche in der zu destillierenden Flüssigkeit vorhandenen Komponenten und andererseits gegen die während des Destillationsvorganges auftretenden Temperaturen beständig sein muss. Um Leckverluste zu vermeiden, ist der Sack vorzugsweise nahtlos ausgebildet. Als Material für derartige Säcke sind Folien aus Polyamiden, Polyimiden, Polyestern oder Polyolefinen geeignet, wobei Folien aus Polyimiden den höchsten Anforderungen genügen. Überraschenderweise wurde auch gefunden, dass für die meisten Verwendungszwecke Säcke aus gewöhnlichem Pergamentpapier bestens geeignet sind und den Durchtritt von den meisten organischen Lösungsmitteln wirksam verhindern. Die Herstellung von nahtlosen Säcken aus den thermoplastischen Vertretern der genannten Kunststoffolien durch Blasen oder Vakuumverformung ist bekannt und nicht thermoplastische Folien, wie beispielsweise Pergamentpapier und Folien aus bestimmten Polyimiden, können durch entsprechendes Falten hergestellt werden. Das Falten von Pergamentpapier zur Herstellung eines nahtlosen Sackes ist in Fig. 5 und 6 der Zeichnungen perspektivisch dargestellt. Die bei derartigem Falten entstehenden Spickel können an der Aussenseite des Sackes auf beliebige Art festgeklebt werden.

Um das Einsetzen des Sackes in die Destillierkammer und das Herausnehmen nach Abschluss des Destilliervorganges zu erleichtern, ist der Sack vorzugsweise in ein bündig in das Innere der Destillierkammer passendes, herausnehmbares Haltegestell eingespannt. In Fig. 3 der Zeichnung ist das Herausnehmen eines in ein derartiges Haltegestell eingespannten Sackes aus der Destillierkammer strichpunktiert angedeutet und aus Fig. 4 ist ersichtlich, dass der herausgenommene, auf eine Unterlage gestellte Sack durch die verkürzte Ausbildung der seitlichen Träger des Haltegestelles solcherart gelockert wird, dass er leicht aus dem Gestell entfernt werden kann.

Die vorstehend beschriebene Ausführungsform der erfindungsgemässen Vorrichtung, bei welcher der Sack mit oder ohne, vorzugsweise jedoch mit Haltegestell, in die Destillierkammer einer beliebigen, nach dem Stand der Technik bekannten Destillationsvorrichtung eingesetzt ist, ermöglicht es, jeden in solchen Destillationsvorrichtungen ausführbaren Destillationsvorgang wesentlich zu verlängern und dadurch zu einem Sumpf mit bedeutend geringerem Anteil an niedrig siedenden Komponenten zu gelangen. Es erfolgt dabei keine Abscheidung und Verkrustung von Innenwandung und Boden der Destillierkammer, so dass Stillstand der Anlage während längerer Dauer und zeitaufwendige manuelle Reinigungsarbeiten entfallen und eine Senkung der Betriebskosten erzielt wird. Ausserdem werden auch die Kosten der Entsorgung durch Spezialbetriebe oder durch Versenken im Meer oder Verbrennen auf Verbrennungsschiffen, die gewichtsmässig berechnet werden, sowie die Kosten für verlorengegangenes Lösungsmittel vermindert.

Eine besonders bevorzugte Ausführungsform der erfindungsgemässen Vorrichtung ist jedoch solcherart ausgebildet, dass die indirekte Beheizung der Destillierkammer nur auf den mit dem Boden des Sackes in Berührung stehenden Bodenteil der Innenwandung der Destillierkammer einwirkt.

Eine derartige Ausführungsform dser Vorrichtung ist in Fig. 3 der Zeichnungen im Schnitt dargestellt und wird nachstehend, unter Bezugnahme auf diese Zeichnung und auf die Verwendung dieser Vorrichtung zum Ausdestillieren von Flüssigkeiten mit hohem Gehalt an höher siedenden Komponenten zu einem von niedrig siedenden Komponenten praktisch freien Rückstand beispielsweise erläutert.

In der Ausführungsform gemäss Fig. 3 wirkt eine indirekte Heizeinrichtung 1 nur auf den Boden der Destillierkammer 2 ein. In die Destillierkammer ist ein, wie in Fig. 4 dargestellt, in einem Haltegestell eingespannter Sack 7 eingehängt, wobei das Haltegestell mit seinem oberen Rand 6 auf dem oberen Rand der Destillierkammer aufliegt und die seitlichen Träger 5 des Haltegestelles den Boden der Destillierkammer nicht berühren, so dass der Sack in gefülltem Zustand ausgestreckt ist und am Boden der Destillierkammer eng anliegt. Der über der Destillierkammer angeordnete Kondensator 3 mit der Kühlschlange 4 und der Ableitung 8 für das Kondensat und der Zuleitung 10 für die zu destillierende Flüssigkeit ist nach oben offen und in Fig.3 ist das Herausnehmen des Sackes mit dem ausdestillierten Rückstand 9 strichpunktiert angedeutet. Die regulierbare Beheizung der Heizeinrichtung 1 kann auf beliebige bekannte Art, beispielsweise durch Öl, Dampf, Heisswasser, elektrisch, erfolgen.

Die Verwendung einer derartigen Ausführungsform der erfindungsgemässen Vorrichtung ermöglicht es, Flüssigkeitenn bis zu einem praktisch lösungsmittelfreien Rückstand in Form eines festen Kuchens oder einer dicken, zähflüssigen Masse auszudestillieren, wonach der im Sack verbleibende Destillationsrückstand mühelos aus der Vorrichtung entfernt und ohne weiteres der normalen Abfallverwertung zugeführt werden kann. Um Zersetzung des Lösungsmittels zu verhindern, wird die zu destillierende Flüssigkeit in den in der Destillierkammer eingesetzten Sack eingefüllt, von unten her durch die indirekte Beheizung erwärmt und unmittelbar vor Erreichen der Zersetzungstemperatur der niedrig siedenden Komponenten der Flüssigkeit wird die Beheizung der Heizeinrichtung 1 abgestellt und die Flüssigkeit dann so lange in der Destillierkammer belassen, bis der Destillationsrückstand praktisch keine niedrig siedenden Komponenten mehr enthält. Nach dem Abschalten der Beheizung kann in der Flüssigkeit keine wesentliche Temperatursteigerung mehr eintreten, jedoch verdampfen die in der Flüssigkeit enthaltenen niedrig siedenden Komponenten aufgrund der in Flüssigkeit und Heizeinrichtung vorhandenen Wärmeenergie über längere Zeitdauer fortlaufend, bis der Rückstand nach Abkühlung der Heizeinrichtung praktisch keine niedrig siedenden Komponenten mehr enthält.

Das für die Herstellung des Sackes zu verwendende jeweilige Material, die Aufheiztemperatur der im Sack befindlichen Flüssigkeit und damit der Zeitpunkt des Abschaltens der Heizeinrichtung sowie die bis zur Erzielung praktisch vollständigen Ausdestillierens benötigte Verweildauer sind abhängig von der Zusammensetzung der auszudestillierenden Flüssigkeit, d.h. von der Zersetzungstemperatur des vorhandenen Lösungsmittels und der Art und dem Mengenanteil der darin enthaltenden, höher siedenden Komponenten sowie von einer allfällig vorgesehenen Wiederverwendung dieser höher siedenden Komponenten. Diese Parameter können, soweit nicht literaturbekannt, leicht durch Vorversuche ermittelt werden.

Ausgedehnte Versuche hatten ergeben, dass der optimale Mengenanteil an höher siedenden Komponenten, insbesondere Festkörpern, bei 6 Gew.-%, bezogen auf das Gesamtgewicht der auszudestillierenden Flüssigkeit, liegt und 10 Gew.-% nicht überschreiten sollte, um einwandfreies Funktionieren sicherzustellen.

Das beschriebene Vorgehen eignet sich besonders zum Ausdestillieren von Sümpfen aus der Destillation von mit Fotoresistlacken verunreinigten Lösungsmitteln, insbesondere chlorierten Kohlenwasserstoffen, die in der Elektronikindustrie bei der Herstellung und Reinigung von Leiterplatten und gedruckten Schaltungen anfallen.

Mit derartigen, bereits in einer Destillationsvorrichtung nach dem Stand der Tecknik destillierten Sümpfen in Form von mit Fotoresistlacken verunreinigten Lösungsmitteln aus der Praxis, wurden zwei Versuchsreihen ausgeführt, wobei in beiden Fällen je 65 kg Flüssigkeit in den in der Destillierkammer mittels eines Haltegestelles eingesetzten Sack gepumpt wurden.

In der ersten Versuchsreihe wurde ein Destillationssumpf in Form einer Lösung von etwa 4 Gew.-% Fotoresistlack als Verunreinigung in Methylenchlorid als Lösungsmittel eingesetzt. Der verwendete Sack war nahtlos aus einer Polyesterfolie geblasen. Die auf den Boden der Destillierkammer indirekt einwirkende Heizeinrichtung wurde mit Öl geheizt und Vorversuche ergaben, dass die elektrische Erwärmung des Öls bei Erreichen einer Temperatur des Öls von 200°C abgestellt werden musste, um Zersetzung des Methylenchlorids zu verhindern. Praktisch vollständiges Ausdestillieren des Methylenchlorids unter Bindung einer klebrigen, zähen, nicht fliessenden Masse, wurde bei Absinken der Sumpf- und Heizöltemperatur bis auf Umgebungstemperatur innert einer Verweildauer von etwa 6 h erreicht.

Die zweite Versuchsreihe wurde auf ähnliche Art unter Verwendung eines mit etwa 6 Gew.-% Fotoresistlack verunreinigten Destillationssumpfes mit 1,1,1-Trichloräthan als Lösungsmittel ausgeführt, wobei ein gemäss Fig. 5 und 6 durch Falten hergestellter, nahtloser Sack aus einer Folie aus einem nicht thermoplastischen Polyimid verwendet wurde. Die elektrische Erwärmung des Öls in der indirekten Beheizung wurde durch Vorversuche ermittelt und bei Erreichen einer Öltemperatur von 320°C ausgeschaltet. Nach Abkühlung der Sumpf- und Öltemperatur auf Umgebungstemperatur innert einer Zeitdauer von etwa 7 h wurde ein praktisch lösungsmittelfreier Rückstand in Form einer klebrigen, zähen, nicht fliessenden Masse erhalten.

Wiederholung der Versuche unter Verwendung von nahtlosen, gemäss Fig. 5 und 6 hergestellten Säcken aus Pergamentpapier ergab erstaunlicherweise ähnliche Resultate, wobei in beiden Versuchsreihen die Aussenseite der Säcke unverschmutzt blieb.

Nach den beschriebenen Vorgängen können Wasch- und Reinigungslösungen aus der blechverarbeitenden Industrie praktisch vollständig aufgeteilt werden, wobei das ausdestillierte Lösungsmittel direkt in die Wasch- und Reinigungsanlage rezirkuliert werden kann und die im Sack als Rückstand anfallenden, meist sehr teuren Spezialöle und Fette nach Entfernung von festen Verunreinigungen, wie Metallspänen, Metall- und anderweitiger Staub, durch Zentrifugation, wiederverwendet werden können.

Die beschriebene Vorrichtung und deren Verwendung ermöglichen bei sehr geringem Heizenergiebedarf und Arbeitsaufwand praktisch vollständiges Ausdestillieren von Sümpfen aus normaler Destillation, die bisher verworfen werden mussten, wodurch bei geringen Betriebskosten die Menge des anfallenden Abfalles und dadurch die Kosten und Umtriebe für dessen Entsorgung stark vermindert werden können.

**Patentansprüche**

1. Vorrichtung für industrielle Destillation mit einer regulierbar indirekt beheizbaren Destillierkammer und einem Kondensator, gekennzeichnet durch einen zumindest am Boden der Destillierkammer eng anliegenden, herausnehmbaren Sack, der aus flexibler Folie aus Polyamid, Polyimid, Polyester oder Polyolefin oder aus Pergamentpapier besteht.

2. Vorrichtung nach Anspruch 1, dadurch gekennzeichnet, dass der Sack aus einer Folie aus Polyamid, Polyimid, Polyester oder Polyolefin besteht.

3. Vorrichtung nach Anspruch 1, dadurch gekennzeichnet, dass der Sack aus Pergamentpapier besteht.

4. Vorrichtung nach einem der vorangehenden Ansprüche, dadurch gekennzeichnet, dass der Sack nahtlos ist.

5. Vorrichtung nach einem der vorangehenden Ansprüche, dadurch gekennzeichnet, dass der Sack in ein bündig in das Innere der Destillierkammer passendes, herausnehmbares Haltegestell eingespannt ist.

6. Vorrichtung nach einem der vorangehenden Ansprüche, dadurch gekennzeichnet, dass die indirekte Beheizung der Destillierkammer nur auf den mit dem Boden des Sacks in Berührung stehenden Bodenteil der Innenwandung der Destillierkammer einwirkt.

7. Verwendung einer Vorrichtung nach Anspruch 6 zum Ausdestillieren von Flüssigkeiten mit hohem Gehalt an höher siedenden Komponenten zu einem von niedrig siedenden Komponenten praktisch freien Rückstand.

8. Verwendung nach Anspruch 7, dadurch gekennzeichnet, dass man die Flüssigkeit in den in der Destillierkammer befindlichen Sack einfüllt, von unten her erwärmt, die indirekte Beheizung der Destillierkammer vor Erreichen der Zersetzungstemperatur der niedrig siedenden Komponenten mit der Flüssigkeit abstellt und die Flüssigkeit dann so lange in der Destillierkammer belässt, bis der Rückstand praktisch keine niedrig siedenden Komponenten mehr enthält.

9. Verwendung nach Anspruch 8 zum Ausdestillieren von Sümpfen aus der Destillation von mit Fotoresistlacken verunreinigten Lösungsmitteln, insbesondere chlorierten Kohlenwasserstoffen.

10. Verwendung nach Anspruch 8 zur Rezirkulation von Lösungsmittel einerseits und Ölen und Fetten andererseits und praktisch vollständige Aufteilung einer Wasch- und Reinigungslösung aus der blechverarbeitenden Industrie.

**Revendications**

1. Installation de distillation industrielle comprenant une chambre de distillation indirectement chauffable d'une façon réglable et un condenseur, caractérisée par un sac amovible en appui étroit au moins contre le fond de la chambre de distillation, ce sac consistant en une feuille flexible de polyamide, de polyimide, de polyester ou de polyoléfine, ou également de papier parchemin.

2. Installation selon la revendication 1, caractérisée en ce que le sac est fait d'une feuille de polyamide, de polyimide, de polyester, ou de polyoléfine.

3. Installation selon la revendication 1, caractérisée en ce que le sac est fait de papier parchemin.

4. Installation selon une des revendications précédentes, caractérisée en ce que le sac est exempt de jonctions, coutures ou soudures.

5. Installation selon une des revendications précédentes, caractérisée en ce que le sac est tendu dans un chassis de maintien amovible qui est adapté dans l'intérieur de la chambre de distillation de façon à bien en suivre la forme.

6. Installation selon une des revendications précédentes, caractérisée en ce que le chauffage indirect de la chambre de distillation agit uniquement sur la partie de fond de la paroi inférieure de la chambre de distillation, en contact avec le fond du sac.

7. Utilisation d'une installation selon la revendication 6, pour distiller des liquides à haute teneur en composants à point d'ébulition élevé pour obtenir pratiquement un produit exempt de composants à point d'ébulition bas.

8. Utilisation selon la revendication 7, caractérisée en ce qu'on remplit le liquide dans le sac qui se trouve dans la chambre de distillation, en ce qu'on chauffe depuis en dessous, en ce qu'on arrête le chauffage indirect de la chambre de distillation avant l'obtention de la température de séparation des composants à point d'ébulition bas, et en ce qu'on laisse ensuite le liquide dans la chambre de distillation assez longtemps, jusqu'à ce que le restant ne contienne pratiquement plus aucun composant à point d'ébulition bas.

9. Utilisation selon la revendication 8 pour la distillation de boue provenant de la distillation de moyens solvants souillés de laques photo-résistantes, en particulier les hydrocarbures chlorés.

10. Utilisation selon la revendication 8 pour la recirculation d'une part de solvants et d'autre part d'huiles et graisses, par une séparation pratiquement complète d'une solution de lavage et de nettoyage provenant de l'industrie du travail de la tôle.

**Claims**

1. Device for industrial distillation having a controllably indirectly heatable distilling chamber and condenser, characterized by a removable bag snugly fitting at least against the plate of the distilling chamber, which bag is made of flexible film of polyamide, polyimide, polyester, or polyolefin, or of parchment paper.

2. Device according to claim 1, characterized in that the bag is made of a film of polyamide, polyimide, polyester, or polyolefin.

3. Device according to claim 1, characterized in that the bag is made of parchment paper.

4. Device according to one of the preceding claims, characterized in that the bag is seamless.

5. Device according to one of the preceding claims, characterized in that the bag is gripped in a removable holding frame fitting flush into the interior of the distilling chamber.

6. Device according to one of the preceding claims, characterized in that the indirect heating of the distilling chamber acts only upon the plate portion of the inside wall of the distilling chamber in contact with the bottom of the bag.

7. Use of a device according to claim 6 for distilling-out liquids having a high content of higher-boiling components to a residue pratically free of low-boiling components.

8. Use according to claim 7, characterized by pouring the liquid into the bag situated in the distilling chamber, heating it from below, shutting off the indirect heating of the distilling chamber before reaching the decomposition temperature of the low-boiling components of the liquid, and then leaving the liquid in the distilling chamber until the residue contains practically no more low-boiling components.

9. Use according to claim 8 for distilling-out bottoms from the distillation of solvents contaminated with photoresists, particularly chlorinated hydrocarbons.

10. Use according to claim 8 for the recirculation of solvent, on the one hand, and oils and greases, on the other hand, through practically complete splitting up of a washing and cleaning solution from the sheet-metal processing industry.

## FIG. 1

```
PROZESS ◄──────────────────────────┐
   │                                │
   ▼                                │
AUFBEREITUNG ──────────►  DESTILLAT │
(DESTILLATION)          SAUBERES LÖSUNGSMITTEL
   │                            ▲
   ▼                            │
DESTILLATIONSRÜCKSTAND     VERLUSTAUSGLEICH
CA. 90%  LÖSUNGSMITTEL
  10%  FESTSTOFFE
   │
   ▼
VERNICHTUNG
```

## FIG. 2

```
PROZESS ◄──────────────────────────────────┐
   │                                        │
   ▼                                        │
AUFBEREITUNG ──────────►  DESTILLAT         │
(DESTILLATION)          SAUBERES LÖSUNGSMITTEL
   │                            ▲
   ▼                            │
DESTILLATIONSRÜCKSTAND          │
CA. 90% LÖSUNGSMITTEL           │
  10% FESTSTOFFE                │
   │                            │
   ▼                            │
AUSDESTILLIERANLAGE ──────►  DESTILLAT
DESTILLATION IN           SAUBERES LÖSUNGSMITTEL
ABFALLSACK → REDUKTION          ▲
DES LÖSUNGSMITTELGEHALTS        │
= REDUKTION DES ABFALLS         │
   │                            │
   ▼                            │
VERNICHTUNG              VERLUSTAUSGLEICH
```

FIG. 3

4

3

9

10

6

5

7

2

8

1

FIG. 4

6

7

5

9

FIG. 5

FIG. 6